# EUROPEAN PATENT APPLICATION

(11) **EP 1 310 654 A1**
(43) Date of publication of application: **14.05.2003**
(21) Application number: 02022545.4
(22) Date of filing: 08.10.2002
(51) Int. Cl.: F02D 41/24, F02D 19/06

(54) **Memory disabling device for engines fed with one or other of two fuels**

(30) Priority: 08.11.2001 IT MI20012346
(71) Applicant: Landi Renzo S.p.A., 42025 Corte Tegge, Cavriago (Reggio Emilia) (IT)
(72) Inventor: Corradini, Flavio, 42100 Reggio Emilia (IT); Landi, Stefano, 42100 Reggio Emilia (IT)
(74) Representative: Ripamonti, Enrico, Dr. Ing.

(57) **Abstract**

A device for engine-driven vehicles provided with a battery and feedable with one or other of two fuels, namely a primary fuel (for example petrol) and a secondary fuel (for example gas) via a changeover switch, and comprising a central electronic engine control unit (4) with which a diagnostic memory (5) is associated to memorize operating errors on switching-off the engine, in which on switching-off the engine when fed with the secondary fuel (for example gas) the diagnostic memory (5) is disabled by interrupting its electrical connection to an electrical power source.

## Description

The invention relates generally to the field of engine-driven vehicles feedable with one or other of two fuels, namely a primary fuel (for example petrol) and a secondary fuel (methane or liquid propane gas). More specifically, the invention relates to a device which prevents anomalies, including spurious anomalies, being memorized and indicated when the engine is fed with the secondary fuel, such as gas. Even more specifically, the invention relates to those automobiles feedable with either a primary fuel (petrol) or a secondary fuel (such as gas) which comprise an electronic control system specifically provided for the primary fuel (petrol) feed and incorporating a memory in which anomalies arising during this specific feed are memorized (for diagnostic purposes) on switching off the engine (for example by extracting the ignition key or a magnetic or electronic card, or by operating a switch-off button or the like). In general, on vehicles of new production, in particular motor vehicles, an electronic control system is present for optimizing engine operation with petrol (OBD or on-board diagnostic system), with the object of limiting the emission of pollutants into the environment. This electronic control system comprises a control unit connected to sensor means arranged for example to determine the composition of the exhaust gases, to ascertain the manner in which the fuel is fed to the engine, and to ascertain the subsequent use of this fuel within the cylinders of said engine. This control unit can also be connected to displays, defined by one or more warning lights, present in the vehicle driving compartment and in particular on its dashboard.

When these vehicles are converted in order to be able to be fed alternatively with gas, such a feed can cause various problems deriving from the sensing of engine operating conditions different from those which have been preset on the control unit for the use of petrol as the fuel. For example, compared with petrol operation, gas operation results in alteration in the composition of exhaust gases (and an alteration in pollutant emissions), alteration in the combustion parameters within the cylinders, and in the fuel feed parameters. As a result, the unit controlling the engine operation records these alterations as engine malfunction (error) conditions.

All this has led to considerable difficulties in feeding said engines with gas. The same applicant has already proposed a solution in which changeover of the feed from petrol to gas involves the generation of a "false signal" corresponding to a disabling signal for the OBD system, this signal being generated by a sensor sensing the petrol level in the tank when this level is less than a predetermined value. This disabling is such as to prevent the OBD system from acting on the warning lights and on the memory member. This known solution operates adequately only in those automobiles prearranged for reading the petrol level signal.

An object of the present invention is to provide an electronic device which prevents memorization of those anomalies attributable to operation with the secondary fuel (gas), but which cannot subsist during operation with petrol.

Another object of the present invention is to provide an electronic device interposed between the vehicle battery and the OBD system (i.e. the relative central control unit) which prevents errors being written into the diagnostic system memory by identifying the correct moment to intervene in order to avoid the problem of memorization in those vehicles in which memorization takes place in the diagnostic system memory on switching off the engine.

These and further objects which will be clearer from the ensuing detailed description are attained by the device of the invention as defined by the accompanying claims.

The invention will be more apparent from the following detailed description of a preferred embodiment thereof given hereinafter by way of non-limiting example and illustrated in the accompanying drawings, in which:
Figure 1 is a schematic diagram relative to the memorization, for diagnostic purposes, of engine anomalies during its operation with the primary fuel (petrol), this memorization occurring on switching off the engine;
Figure 2 is a schematic view of the device of the invention;
Figure 3 shows the "truth" table relative to the device of the invention; and
Figure 4 shows the flow diagram of the device of the invention.

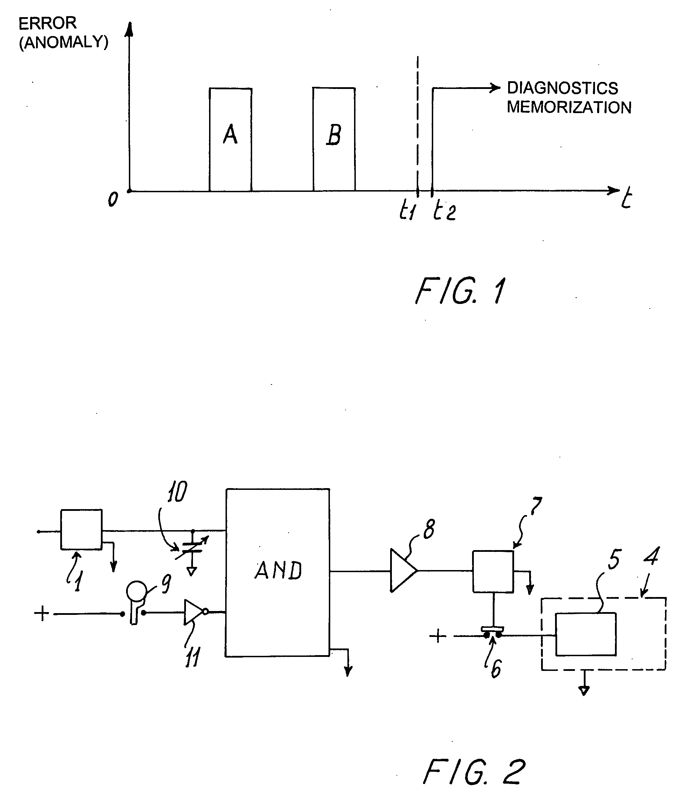

The diagram of Figure 1 relates to a vehicle fed with primary fuel (petrol) in which memorization for diagnostic purposes takes place on engine switch-off.

The horizontal axis represents time, whereas the vertical axis represents engine errors or anomalies during petrol operation. In this example, which is purely explicative, the two anomalies A and B (these anomalies being memorized in a temporary memory) occurred with the engine operating on petrol. At time t₁ the engine is switched off (for example the ignition key is removed) and at time t₂ transfer of the temporary memory contents to the diagnostic memory commences.

The invention utilizes this operative characteristic to prevent such a transfer taking place on the aforesaid occasion, i.e. on engine switch-off, if the engine is fed with gas, by interrupting for this purpose the power (for example battery) to the diagnostic memory, to hence disable it.

The device of the invention proposed for this purpose is shown schematically in Figure 2. In this, the reference numeral 1 indicates a conventional changeover switch (electrical/electronic) which controls the passage from for example petrol feed to for example gas feed and vice versa.

A conventional electronic engine control unit 4 (central control unit relative for example to petrol operation) in which the diagnostic memory indicated by 5 and the temporary memory are present. The diagnostic memory 5 is powered by the vehicle battery via a normally closed switch 6 controlled by a relay 7. The relay is energized by the output of an AND logic circuit and amplified by electronic amplifier means 8. The AND logic circuit has two inputs represented respectively by the output of the changeover switch 1 and by the connection which is established with the battery by means of the ignition key 8 and an inverter 11. A timer means represented by a possibly variable capacitor 10 branches from the connection between the changeover switch 1 and the AND circuit.

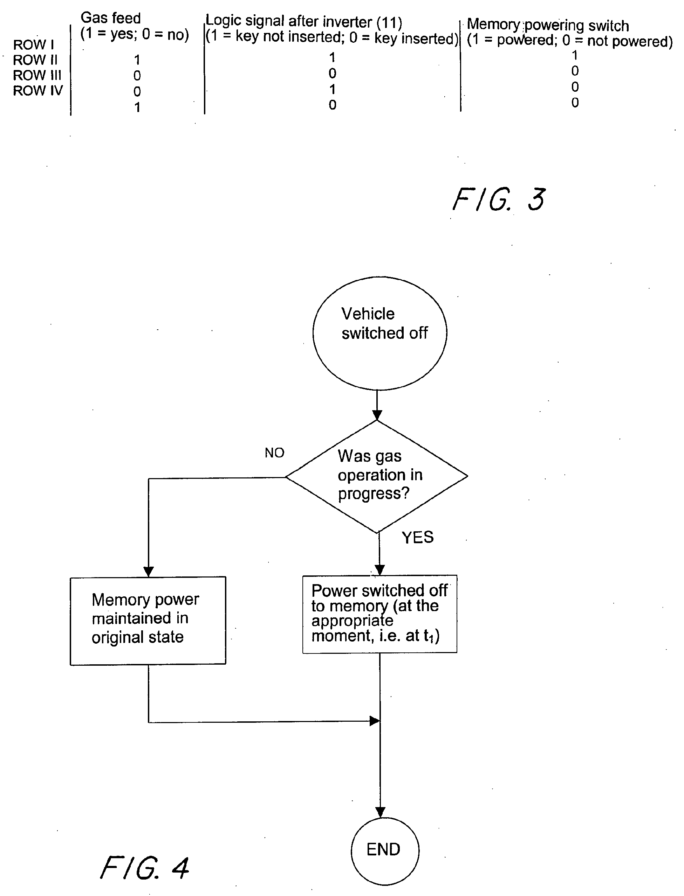

The operation will now be described with more or less explicit reference to Figures 3 and 4.

When operating for example on petrol the switch 6 is closed. In addition, at the output of the changeover switch 1 a logic signal "0" is present representative of petrol operation. The key 9 is switched on but as there is also the inverter 11 the logic signal applied to the AND circuit is also "0". The logic output from the AND circuit is therefore "0" and the switch 6 remains closed. In the "truth" table the situation is that of row II of Figure 3. In this example the ignition key 9 is removed (after operation on petrol) to switch off the engine, hence the signals "0" and "1" will be applied to the input of the AND circuit, so that its output will again be "0" (logic situation reproduced in row III of Figure 3).

It will be assumed that by means of the changeover switch 1 the feed has been set for example to gas and the ignition key 9 has been switched on. In this situation the capacitor 10 charges, the signals applied to the AND circuit then being "1" and "0" respectively so that the output from the AND circuit is also "0" and the switch 6 remains closed. The logic situation is expressed by row IV of Figure 3.

In this example the driver extracts the ignition key 9. As a result, the AND circuit receives the logic signal "1" on the same side as the inverter 11, and the logic signal "1" via the capacitor 10 (previously charged during the course of operation on gas). The AND circuit responds by opening the switch 6 towards the amplifier 8 and the relay 7 (situation of row I of Figure 3) so that the diagnostic memory is no longer powered and transfer of error signals from the temporary memory to the diagnostic memory 5 does not take place. A conventionally provided malfunction indicator lamp (MIL), not shown, is not lit by the central unit 4 because there is no error in the diagnostic memory 5.

For completion of the description it should be noted that relay 7 (with the switch 6) can be replaced by a static switch, the inverter 11 can be part of an integrated circuit forming part of the AND circuit, the amplifier 8 can be multi-stage or form part of an integrated circuit incorporating the static switch function (provided by the components 6 and 7 in the example). The flow diagram of Figure 4 is self-explanatory and will therefore not be described.

## Claims

1. A device for engine-driven vehicles provided with a battery and feedable with one or other of two fuels, namely a primary fuel (for example petrol) and a secondary fuel (for example gas) via a changeover switch and comprising a central electronic engine control unit (4) with which a diagnostic memory (5) is associated to memorize operating errors on switching-off the engine, **characterised in that** on switching-off the engine when fed with the secondary fuel (for example gas) the diagnostic memory (5) is disabled by interrupting its electrical connection to an electrical power source.

2. A device as claimed in claim 1, wherein the electrical connection between the memory (5) and the electrical power source is interrupted by a switch (6) controlled by a logic comparison circuit (11, AND) in which a signal relative to engine switch-off is compared with a signal which is protracted in time beyond this switch-off and signifying operation with the secondary fuel (for example gas).

3. A device as claimed in the preceding claims, wherein the logic comparison circuit comprises an AND logic circuit and an inverter (11) connected to one of the inputs of said AND logic circuit, said inverter (11) being operationally associated with the engine switch-off means (9).

4. A device as claimed in claim 2, wherein the protraction in time of the signals applied to the logic comparison circuit (11, AND) is achieved by a capacitive component (10) chargeable via the changeover switch (1) when this latter is switched to secondary fuel (for example gas) feed.

5. A device as claimed in the preceding claims, wherein the output signal from the logic comparison circuit (11, AND) is amplified and applied to an electromagnetic switch (6, 7) provided for powering the memory (5).
